# EUROPÄISCHE PATENTSCHRIFT

(11) **EP 2 560 861 B1**
(45) Veröffentlichungstag und Bekanntmachung des Hinweises auf die Patenterteilung: **08.01.2014**
(21) Anmeldenummer: 11718284.0
(22) Anmeldetag: 19.04.2011
(51) Int. Cl.: B62D 65/18

(54) **FÖRDEREINRICHTUNG FÜR AUTOMATISIERUNGSSTRASSEN**
CONVEYING DEVICE FOR AUTOMATION PRODUCTION LINES
DISPOSITIF DE TRANSPORT POUR VOIES D'AUTOMATISATION

(30) Priorität: 19.04.2010 DE 102010015618
(43) Veröffentlichungstag der Anmeldung: 27.02.2013
(73) Patentinhaber: Ebz Systec GmbH, 88212 Ravensburg (DE)
(72) Erfinder: STADLER, Rainer, 88605 Rast (DE); SCHMEH, Alexander, 88213 Ravensburg (DE)
(74) Vertreter: Otten, Alexander
(86) Internationale Anmeldenummer: PCT/EP2011/001974
(87) Internationale Veröffentlichungsnummer: WO 2011/131337

(56) Entgegenhaltungen:
- DE-U1-202007 005 034
- US-A1- 2003 070 902

## Beschreibung

Die Erfindung betrifft eine Fördereinrichtung zum Transport von Bauteilen oder Bauteilgruppen von und zu einer oder mehreren Arbeitsstationen an einer Automatisierungsstraße.

Insbesondere in der sogenannten Rohbaumontage von Fahrzeugkarosserien werden die verschiedenen Karosserieteile an mehreren Arbeitsstationen mit Hilfe von Robotern durch Punktschweißungen oder andere Verbindungsmethoden miteinander verbunden. Die Roboter sind dabei so programmiert, dass sie an genau definierten Koordinaten des Raumes ihre Verbindungen anbringen. Aufgabe einer Fördereinrichtung, welche die einzelnen Bauteile oder Bauteilgruppen an den Arbeitsstationen zur Verfügung stellt ist es, die Bauteile oder Bauteilgruppen präzise, oftmals auf den Bruchteil von Millimetern genau an die richtige Stelle zu führen, sodass die den Robotern vorgegebenen Koordinaten und die Position des Werkstücks aus Bauteilen oder Bauteilgruppen möglichst exakt übereinstimmt. Die Positionierung des Werkstücks erfolgt dabei entlang dreier Raumrichtungen X, Y, Z, indem ein Bauteilträgerwagen als Bestandteil der Fördereinrichtung ausgerichtet wird. Der Bauteilträgerwagen fährt hierbei in die Arbeitsstation ein und muss dann entlang seiner Bewegungsrichtung (X), quer zur Bewegungsrichtung (Y) und in der Vertikalen (Z) ausgerichtet werden.

Aus dem Stand der Technik sind Anlagen bekannt, bei denen der Bauteilträgerwagen, welcher zumeist auf einer Rollenbahn bewegt wird oder selbst über eigene Rollen auf einer Schienenbahn fährt, angehalten wird, und sodann über Hubvorrichtungen auf eine Positionierschablone abgesenkt oder von dieser angehoben wird.

Dieser Vorgang ist jedoch sehr Zeitaufwändig und behindert dadurch die Anforderung an immer kürzere Taktzeiten pro Arbeitsstation beim Durchlaufen einer Fertigungsstraße. Dies ist insbesondere daher von Nachteil, da der Positioniervorgang nicht wertschöpfend als Bearbeitungszeit zur Verfügung steht.

Eine Lösung aus dem Stand der Technik der DE 20 2007 005 034 U1 besteht darin, die Positionierung zumindest teilweise durch den Einfahrvorgang selbst einzuleiten, indem einzelne Auflaufrollen auf Auflaufkufen auflaufen und dabei die Z-Positionierung vornehmen. Problematisch an derartigen Anordnungen ist jedoch, dass alle Auflaufkufen beim Einfahren des Bauteilträgerwagens von allen Auflaufrollen überfahren werden, wodurch eine Art "Eisenbahneffekt" entsteht, der zu erhöhter Erschütterung, Verschleiß und verstärkter Lärmentwicklung führt.

Weiterhin ist aus der gattungsgemäßen US 2003/0070902 A1 eine Fördereinrichtung zum Transport von Bauteilen oder Bauteilgruppen von und zu einer oder mehreren Arbeitsstationen nach dem Oberbegriff des Anspruchs 1 bekannt.

Aufgabe der Erfindung ist es, eine schnell arbeitende und präzise positionierende Fördereinrichtung zur Verfügung zu stellen, welche die Nachteile des Standes der Technik vermeidet.

Diese Aufgabe wird, ausgehend vom Oberbegriff des Anspruchs 1 durch die kennzeichnenden Merkmale des Anspruchs 1 gelöst.

Vorteilhafte Weiterbildungen sowie zweckmäßige Ausgestaltungen sind in den abhängigen Ansprüchen gegeben.

Die Erfindung ermöglicht es die Transportzeit von herkömmlichen Systemen erheblich zu reduzieren, da die Positionierung des Bauteilträgerwagens in allen drei Richtungen (X/Y/Z) durch die Transportbewegung erfolgt. Ein Absenken bzw. Anheben für eine Fixierung ist nicht erforderlich. Weiterhin kann durch den konzeptionellen Aufbau des Systems die Beschleunigung bzw. Verzögerung und somit die Gesamttransportgeschwindigkeit erhöht werden.

Die Erfindung ist eine Fördereinrichtung zum Transport von Bauteilen oder Bauteilgruppen von und zu einer oder mehreren Arbeitsstationen, wobei die Fördereinrichtung eine Förderbahn und einen auf der Förderbahn bewegten Bauteilträgerwagen umfasst. Im Bereich der Arbeitsstationen an der Förderbahn sind Positioniervorrichtungen vorgesehen, welche mit Positioniermitteln an dem Bauteilträgerwagen derart zusammenwirken, dass eine gewünschte Position des Bauteilträgerwagens in der Arbeitsstation in allen drei Raumrichtungen (X, Y, Z) direkt durch die Einfahrbewegung des Bauteilträgerwagens in die Arbeitsstation eingenommen wird. Die Erfindung ist dadurch gekennzeichnet, dass während der gesamten Einfahrbewegung des Bauteilträgerwagens in die Arbeitsstation jedes Positioniermittel an dem Bauteilträgerwagen mit nur seiner korrespondierenden, die gewünschte Position bestimmende Positioniervorrichtung an der Förderbahn in Berührung kommt.

Auf diese Weise wird ein mehrfaches Überfahren einzelner Positioniermittel bzw. Positioniervorrichtungen vermieden, da nur das jeweilige Paar an Positioniermittel und Positioniervorrichtung miteinander in Berührung kommt, welches für die entsprechende Positionierung an dieser Stelle und/oder in dieser Raumrichtung verantwortlich ist.

Die in den abhängigen Ansprüchen angegebenen vorteilhaften Ausführungen sowie zweckmäßigen Weiterbildungen der erfindungsgemäßen Fördereinrichtung, werden in den folgenden Ausführungsbeispielen näher erläutert. Die Erfindung ist jedoch nicht auf die gezeigten Ausführungsformen beschränkt. Sie erfasst vielmehr all diejenigen Ausführungsarten, welche von dem jeweilig beanspruchten, erfindungswesentlichen Gedanken gebrauch machen.

Es zeigen:
- Fig. 1: Eine Seitenansicht einer schematischen Arbeitsstation mit einfahrendem Bauteilträgerwagen;
- Fig. 2: Eine Draufsicht einer schematischen Arbeitsstation mit einfahrendem Bauteilträgerwagen;
- Fig. 3a-d: Verschiedene Ansichten eines erfindungsgemäßen Fördersystems mit Positionierrollen auf einer Hubeinheit mit Kegel-Y-Positionierung;
- Fig. 4a-d: Verschiedene Ansichten eines erfindungsgemäßen Fördersystems mit Positionierrollen auf einer Hubeinheit mit Schwert-Y-Positionierung;
- Fig. 5a-c: Verschiedene Ansichten eines erfindungsgemäßen Fördersystems mit einem Bauteilträgerwagen mit Rollen;
- Fig. 6a-c: Verschiedene Ansichten eines erfindungsgemäßen Fördersystems mit versetzt angeordneten Positionierrollen und diagonaler Schwert-Y-Positionierung;
- Fig. 7a-e: Eine Seitenansicht und Schnittdarstellungen eines erfindungsgemäßen Fördersystems mit versetzt angeordneten Positionierrollen;
- Fig. 8: Eine Längsansicht eines erfindungsgemäßen Fördersystems mit alternativer X-Positionierung;
- Fig. 9a-e: Verschiedene Momentaufnahme des Einfahrablaufs einer Ausführung einer erfindungsgemäßen Positioniereinrichtung;
- Fig. 10a-c: Eine Draufsicht sowie Schnittdarstellung eines erfindungsgemäßen Fördersystems mit angetriebenen gefederten Förderrollen.
- Fig. 11a-b: Eine abgewandelte Ausführungsform der Z-Positionierung des erfindungsgemäßen Fördersystems mit gefederten Förderrollen.
- Fig. 12: Eine perspektivische Darstellung eines erfindungsgemäßen Fördersystems mit teilweise dargestelltem Bauteilträger.

Die dargestellten Ausführungsbeispiele zeigen verschiedene technische Details der erfindungsgemäßen Fördervorrichtung, welche jedoch nicht abschließend einzig auf das gezeigte Ausführungsbeispiel beschränkt sind, sodass die unterschiedlichen Positionierungen durch unterschiedliche Positioniervorrichtungen und Positioniermittel, soweit technisch möglich und sinnvoll, an den einzelnen Ausführungsformen jeweils eigenständig permutiert und realisiert werden können, um der entsprechend geforderten Positionierung gerecht zu werden und an eventuell bereits existierende Anlagentechnik anpassbar zu sein.

Des Weiteren sind äquivalente Teile durchgehend mit gleichen Bezugszeichen versehen, ohne im Einzelnen in den jeweiligen Figurenbeschreibungen erneut erwähnt zu werden.

Zur besseren Darstellung der Raumrichtung sind den einzelnen Figuren, soweit erforderlich, Koordinatenachsen beigefügt.

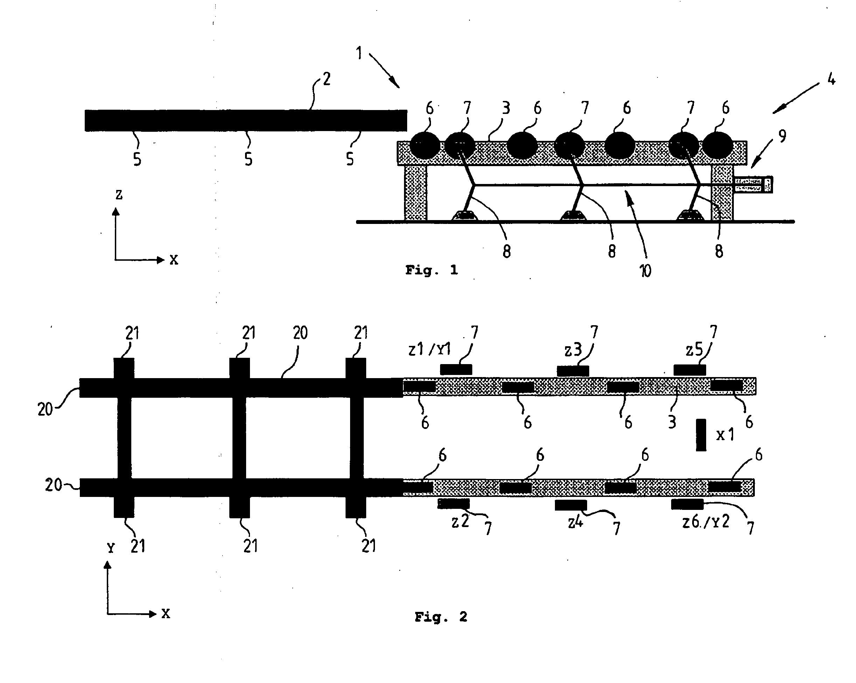

Fig. 1 zeigt eine schematische Seitenansicht einer erfindungsgemäßen Fördereinrichtung 1, bei welcher ein Bauteilträgerwagen 2 auf einer Rollenbahn 3 in den Bereich einer Arbeitsstation 4 einfährt. Die zur Arbeitsstation 4 führende Rollenbahn ist vorliegend nicht dargestellt.

Der Bauteilträgerwagen 2 umfasst an seiner Unterseite Z-Auflagen 5, welche entsprechend ihrer jeweiligen Position unterschiedliche Positionieraufgaben erfüllen. Der Bauteilträgerwagen 2 fährt auf der Rollenbahn 3 über Förderrollen 6 in die Arbeitsstation 4 ein, bis die Z-Auflagen 5 kurz vor dem Erreichen ihrer Endposition mit Positionierrollen 7 zusammenwirken können.

Entsprechend ihrer Anordnung am Bauteilträgerwagen 2 wirken die Z-Auflagen 5 jeweils nur mit ihrer direkt für ihre Positionierung verantwortlichen Positionierrolle 7 zusammen, sodass in der erfindungsgemäßen Fördereinrichtung 1 erreicht wird, dass beim Überfahren der Rollenbahn 3 durch den Bauteilträgerwagen 2 kein Kontakt zwischen den nicht zueinander korrespondierenden Z-Auflagen 5 und Positionierrollen 7 stattfindet.

Der erfindungsgemäße Zweck wird in vorliegend schematisch dargestellter Ausführung der Fördereinrichtung 1 dadurch erreicht, dass über eine Kniehebelmechanik 8 und eine Antriebsvorrichtung 9 die Positionierrollen 7 durch eine Hubeinheit 10 erst kurz vor dem Erreichen der Endposition leicht angehoben werden, sodass sie von einer ersten, unterhalb der Förderrollen 6 liegenden Stellung in eine zweite, oberhalb der Förderrolle 6 liegende Stellung überführt werden und somit mit den jeweiligen Z-Auflagen 5 des Bauteilträgerwagens 6 in Berührung gelangen.

Fig. 2 zeigt eine Draufsicht einer schematischen Darstellung einer erfindungsgemäßen Fördereinrichtung 1, wobei der Zustand im Wesentlichen der Darstellung aus Fig. 1 entspricht.

Der Bauteilträgerwagen 2 weist außerhalb seiner Längsträger 20 Ausleger 21 auf, welche die Z-Auflagen 5 tragen. Es wäre jedoch auch denkbar, die Z-Auflagen 5 auf der Innenseite der Längsträger an Auslegern anzuordnen, was der prinzipiellen Funktion nicht entgegenwirken würde. Der Bauteilträgerwagen 2 fährt auf die Rollenbahn 3 auf, wobei er dabei auf Förderrollen 6 mit seinen Längsträgern 20 läuft. Entsprechend der Position der Ausleger 21 ist in der Arbeitsstation 4 neben der Rollenbahn 3 eine Anordnung von Positioniervorrichtungen vorgesehen, welche die Positionierrollen 7 umfassen. Hierbei sind die jeweilig dargestellten Positioniervorrichtungen Z1 bis Z6, Y1, Y2, X1 für die Positionierung in der jeweiligen Raumrichtung verantwortlich. Die einzelnen vorgesehenen Positioniervorrichtungen werden im Folgenden näher erläutert.

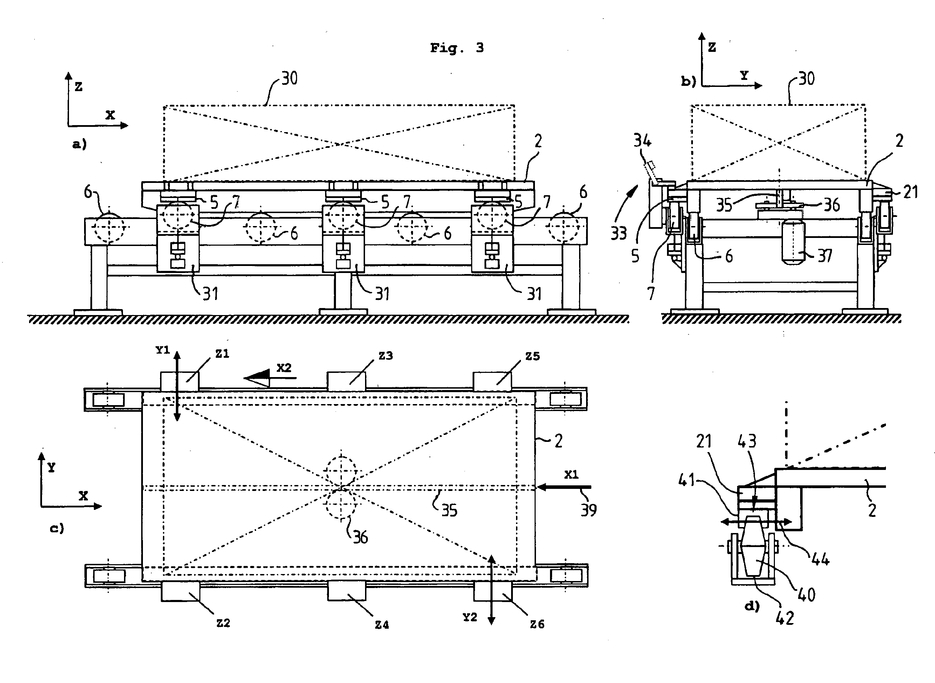

Fig. 3 zeigt eine weitere schematische Darstellung einer erfindungsgemäßen Ausführung einer Fördereinrichtung 1, wobei Fig. 3a eine Seitenansicht darstellt, Fig. 3b eine Schnittdarstellung in Längsansicht, geschnitten durch die mittlere Positioniervorrichtung, Fig. 3c eine Draufsicht sowie Fig. 3d eine Detailansicht der Y-Positionierung.

In Fig. 3a ist der Bauteilträgerwagen 2 mit einem darauf angeordneten Bauteil 30 dargestellt, wie er in der Arbeitsstation 4 eingefahren und vollständig positioniert ist. Die Positionierrollen 7 sind hierbei durch Hubzylinder 31 als Aktuator 9 entsprechend entlang der vertikalen Z Richtung ausgefahren worden, sodass ein Auffahren der Z-Auflagen 5 auf die Positionierrollen 7 erfolgt ist. Der Bauteilträgerwagen 2 ist somit von den Förderrollen 6 abgehoben, wobei diese Strecke nur wenige Millimeter betragen kann. Systembedingt können durch die sehr kurzen Z Wege (ca. 1-5mm) weitere Prozessbewegung (z. B. Das Eintauchen eines Roboters oder einer weiteren Bewegung von außen) frühzeitig angestartet werden was ebenfalls zu weiteren Taktzeitreduzierung führen kann.

Fig. 3b zeigt eine Darstellung in einer Frontalansicht, wobei die Darstellung einem Schnitt durch die Ebene der mittleren Positionierrolle 7 entspricht. Der Bauteilträgerwagen 2 ist hierbei auf die Positionierrollen 7 aufgefahren, wobei die Z-Positionierung durch die vertikale Anordnung der Positionierrollen 7 vorgeben ist. Die Z-Auflage 5 liegt hierbei auf den Positionierrollen 7 auf, wobei die Z-Auflage 5 unterhalb der Ausleger 21 angeordnet ist. Optional kann im Bereich der Positionierrollen 7 vorgesehen sein, die Ausleger bzw. Z-Auflagen von oben her mit einem Spannmittel 33 zu sichern, welches beispielsweise in Form eines Kniehebels 34 ausgeführt sein kann, sodass die Z-Position auch in vertikaler Richtung nach oben hin fixiert ist, und beispielsweise Erschütterungen bei der Bearbeitung keine Ungenauigkeit in Z-Richtung hervorrufen können. Alternativ und später beschrieben kann auch eine Spannrolle vorgesehen sein.

Der Bauteilträgerwagen 2 ist vorliegend mit einer Reibrollen-Schwertkombination angetrieben, wobei auf der Unterseite des Bauteilträgerwagens 2 ein Längsschwert 35 vorgesehen ist. Das Längsschwert 35 ist in einen Bereich zwischen zwei Reibrollen 36 eingetaucht, welche über einen Motor 37 drehend angetrieben sind, und an der Fördereinrichtung, insbesondere an der Rollenbahn 3 befestigt wurden. Vorteilhaft an einem derartigen Schwertantrieb ist, dass ein Versatz in Z-Richtung, welcher durch die Z-Positionierung erfolgt, unerheblich ist, da das Schwert 35 in seiner Eintauchtiefe zwischen die Reibrollen 36 variabel ist, ohne dabei die entsprechende Antriebswirkung zu verlieren.

Der Bauteilträgerwagen ist so konzipiert das ein Transport sowohl mit dem Schwert-Antriebssystem als auch mit herkömmlichen Rollenbahnsystemen mit angetriebenen Förderrollen möglich ist. Im Falle des Einsatzes von Rollenbahnsystemen ist nur ein kurzes Stück der Linearleiste und ein Reibradsatz erforderlich.

Fig. 3c zeigt eine Draufsicht der entsprechenden Anordnung, wobei die einzelnen Positionieranordnungen Z1 bis Z6, Y1, Y2 sowie X1 dargstellt sind. Die X-Positionierung ist vorliegend als Anschlag 39 ausgebildet, welcher am vorderen Ende in Bewegungsrichtung des Bauteilträgerwagens 2 angeordnet ist. Der Anschlag 39 ist vorliegend nicht näher dargestellt. Es sind jedoch entsprechende Anschlagsanordnungen aus dem Stand der Technik bekannt.

Die Positionierung entlang der Z-Richtung erfolgt durch die einzelnen Ausleger 21 mit den entsprechenden Z-Auflagen 5 an den Stellen Z1 bis Z6 durch Auffahren auf Positionierrollen 7. Zusätzlich ist an der Stelle der Positioniermittel Z1 und Z6 eine jeweilige Y-Positionierung Y1, Y2 vorgesehen, welche in folgendem Ausführungsbeispiel der Fig. 3d näher beschrieben wird.

Fig. 3d zeigt eine Detailansicht der Y-Z-Positionierung an der Stelle Y1, Z1 bzw. Y2, Z6. Hierbei ist vorgesehen, dass die Positionierrolle 7 als Kegelrolle 40 ausgebildet ist, welche sowohl einerseits an einer Y-Z-Auflage 41 die Z-Positionierung durch Auffahren auf die Rollenfläche 42 bereitstellt, als auch andererseits durch eine entsprechende Vertiefung 42 eine Positionierung in Y-Richtung erzielt. Der Eingriff der Kegelrolle 40 in die Vertiefung 43 der Y-Z-Auflage stellt in Y-Richtung einen Formschluss dar, der bei entsprechend präziser Fertigung der Vertiefung 43 und der daran angepassten Kegelform der Kegelrolle 40 eine ausreichende Präzision der Y-Positionierung beim Auffahren auf diese Positionierrollen erreicht.

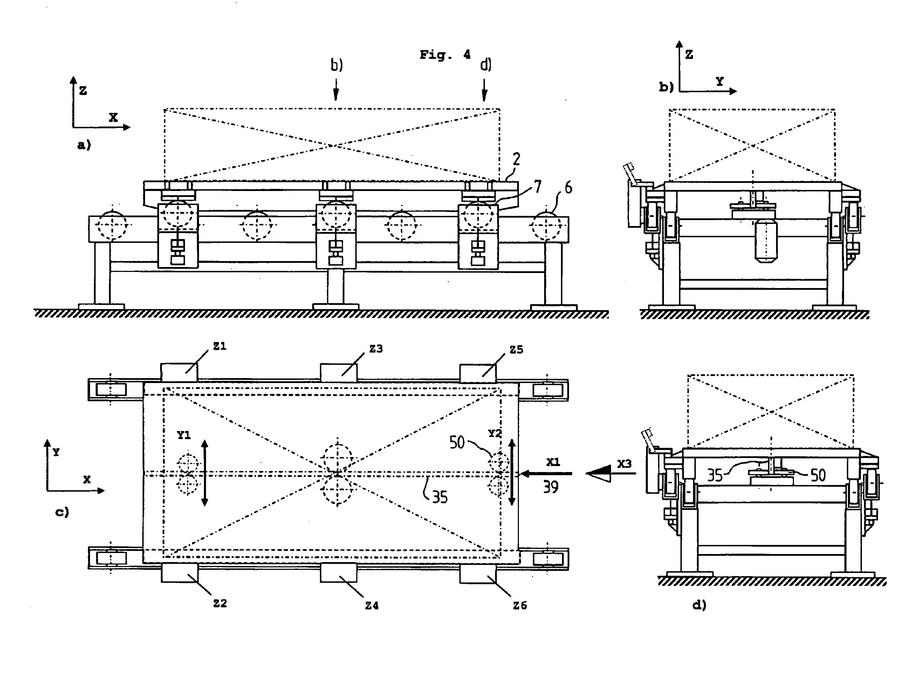

Fig. 4 zeigt eine weitere Darstellung einer Ausgestaltung der erfindungsgemäßen Fördereinrichtung. Fig. 4a entspricht der in Fig.3a beschriebenen Anordnung mit Hubzylindern. Entlang der Schnittrichtungen b) und d) sind die Ansichten dargestellt, welche jeweils in Längssicht in Fig. 4b und 4d gezeigt sind.

Fig. 4b zeigt die bereits beschriebene Ausführung mit Reibradantrieb an einem Längsschwert unterhalb des Bauteilträgerwagens 2.

Fig. 4c stellt eine weitere Anordnung der möglichen Y-Positionierung zur Verfügung, bei welcher das Schwert 35 in Längsrichtung am vorderen sowie hinteren Endbereich des Bauteilträgerwagens 2 in Y-Rollenpaaren 50 geführt wird. Beim Einfahren in die Arbeitsstation wird das Schwert in die Rollenpaare 50 eingeführt, sodass diese dem Schwert eine exakte Position entlang der Y-Richtung vorgeben. Die Anordnung am Endbereich bietet eine einfachere und damit exaktere Positionierung, da der Drehpunkt der gesamten Anordnung im Wesentlichen im Zentrum des Bauteilträgerwagens 2 liegt.

Fig. 4d zeigt eine Schnittdarstellung der Y-Positionierung am Längsschwert 35. Das Y-Rollenpaar 50 nimmt dabei das Längsschwert 35 zentrisch auf und führt dieses in eine gewünschte vorgegebene exakte Position. Ein vertikaler Versatz durch das Auffahren auf Z-Auflagen ist, ebenso wie beim Antrieb am Längsschwert hier unerheblich.

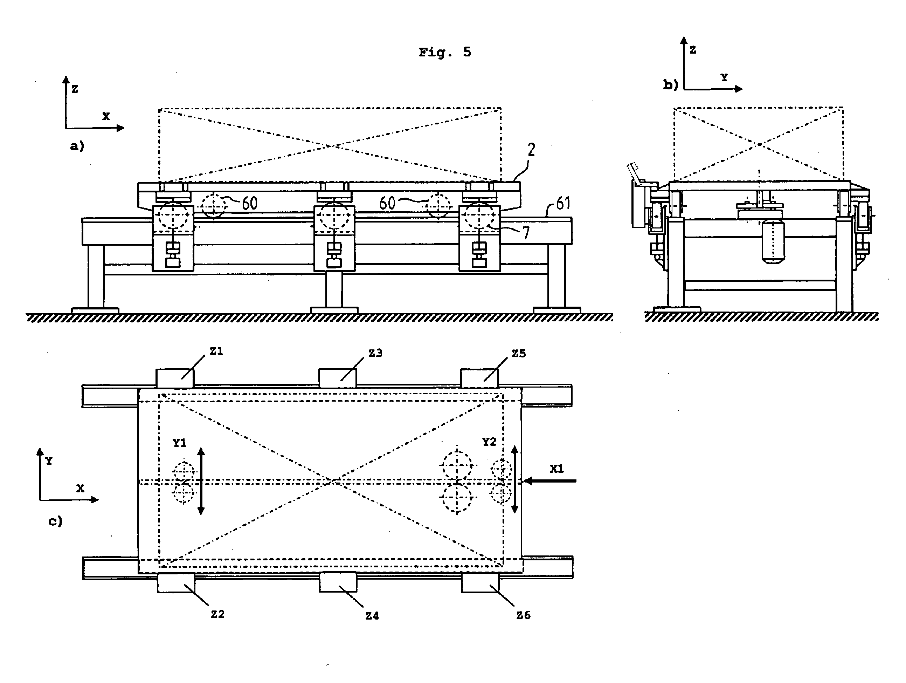

Fig. 5 zeigt eine weitere Ausgestaltung der erfindungsgemäßen Fördereinrichtung 1, wobei vorliegend der Bauteilwagen 2 nicht als auf einer Rollenbahn 3 bewegter Bauteilwagen ausgestattet ist, sondern vielmehr an seiner Unterseite selbst Laufrollen 60 aufweist, mit welchen er auf Schienen 61 verfahrbar gelagert ist. Antrieb sowie Y-Positionierung als auch Z- bzw. X-Positionierung entsprechen den vorangegangenen Ausführungsbeispielen.

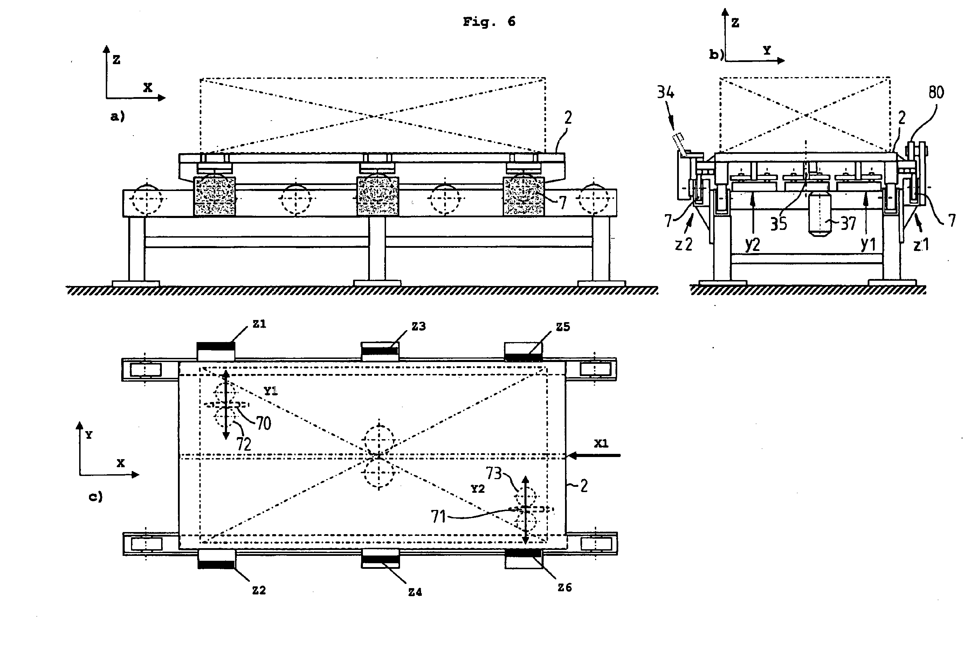

Fig. 6 zeigt eine weitere Ausführung der erfindungsgemäßen Fördereinrichtung 1, wobei in Fig. 6 sowohl eine alternative Ausführung der Anordnung der Z-Positionierrollen als auch der Y-Positionierung dargestellt ist.

Fig. 6a zeigt die bereits mehrfach dargestellte Seitenansicht, wobei vorliegend keine Aktuatoren zur Bewegung der Z-Positionierrollen 7 in vertikaler Richtung vorgesehen sind.

Das erfindungsgemäße Ausführungsbeispiel der Fig. 6 wird in seiner technischen Funktion durch die Darstellung von Fig. 6c weiter verdeutlicht. Die Z-Positionierrollen 7 an den Positionen Z1 bis Z6 sind, wie Fig. 6c zu entnehmen ist, jeweils entlang ihrer Rollenachse leicht versetzt angeordnet, sodass die Z-Positionierrollen 7 an den Positionen Z5 und Z6 dem Längsträger 20 des Bauteilwagens 2 am nächsten liegen und die Positionierrollen 7 an den Positionen Z1 und Z2 den größten Abstand entlang ihrer Achse vom Längsträger 20 des Bauteilträgerwagens 2 aufweisen. Die Positionierrollen 7 an den Positionen Z3 und Z4 sind dazwischenliegend angeordnet.

Die Z-Auflagen 5 an den Auslegern 21 sind jeweils entsprechend als schmale Auflagestreifen angeordnet, sodass beim Einfahren des Bauteilträgerwagens 2 in die Arbeitsstation 4 die jeweilige Z-Auflage 5 nur mit der zugehörigen Positionierrolle 7 für die Endposition in Berührung kommt. Die Anordnung der Positionierrolle 7 entlang ihrer Achse ist somit eindeutig der entsprechenden Auflage 5 zugeordnet.

Zur X-Positionierung ist erneut ein Anschlag vorgesehen, welcher nicht näher dargestellt ist.

Als Y-Positionierung ist einerseits eine Kegelrolle 40 in Form der Darstellung aus Fig. 3d denkbar, andererseits ist aber vorliegend auch eine Variante der Y-Positionierung in Form von Doppel-Rollen 50 entlang des Längsschwerts 35 möglich. Eine weitere Möglichkeit der Y-Positionierung kann auch an den dargestellten Positionen Y1 sowie Y2 vorgesehen sein, indem entlang der Diagonalen auf der Unterseite des Bauteilträgerwagens 2 zusätzliche Positioniermittel in Form von Längsschwertern 70, 71 vorgesehen sind, welche in entsprechende Positioniervorrichtungen in Form von Rollenpaaren 72, 73 einfahren und somit eine exakte Y-Positionierung bereitstellen. Auf diese Weise kann die Y-Positionierung unabhängig vom Vorhandensein eines mittleren Längsschwerts 35 erreicht werden.

Fig. 6b zeigt eine Darstellung einer Längsprojektion in Frontalansicht, bei welcher sowohl der Reibrollenantrieb an einem Mittelschwert 35 über den Motor 37 ausgebildet ist, als auch die entsprechenden Y-Positionierungen Y1 sowie Y2 entlang der Diagonalen des Bauteilträgerwagens 2 angeordnet sind. Als Spannmittel 33 an der Z-Positionierung ist vorliegend exemplarisch auf der linken Seite der Fig. 6b die bereits in Fig. 3b gezeigte Klemmhebelmechanik 34 dargestellt, wobei alternativ auf der rechten Seiten als weitere Ausführungsform eine Z-Fixierung über eine Positionierrolle 80 vorgesehen ist. Ein Z-Auflagen-Positionierpaket bestehend aus Ausleger 21 sowie Z-Auflage 5 fährt hierbei zwischen Positionierrolle 7 und die Gegenrolle 80 ein, sodass in vertikaler Richtung auch ein Ausweichen der Position nach oben durch die Gegenrolle 80 verhindert wird, beispielsweise wenn durch entsprechende Roboter im Bereich der Bearbeitungsstation 4 vertikale Kräfte auf das Bauteil 30 und damit auf den Bauteilträgerwagen 2 einwirken.

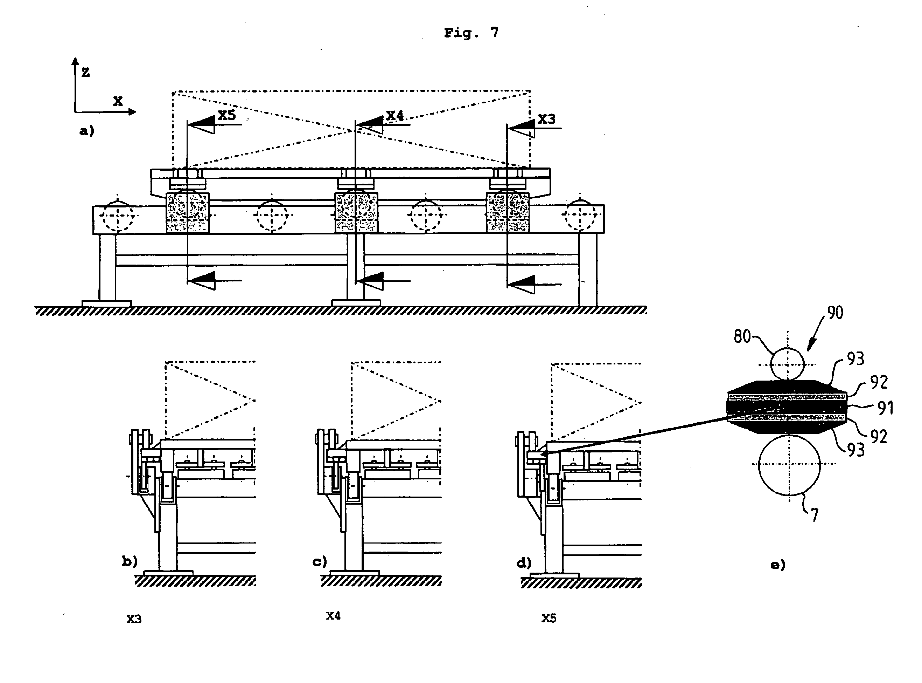

Fig. 7 zeigt eine Seitendarstellung einer erfindungsgemäßen Anordnung mit drei versetzten Z-Positionierrollen 7 gemäß Fig. 6b an den Positionen Z2, Z4 sowie Z6.

Fig. 6a zeigt die Seitenansicht mit der Darstellung der entsprechenden Schnittebenen X3, X4 und X5.

Fig. 6b, 6c sowie 6d zeigen die jeweilige Anordnung der entsprechenden Z-Positionierrolle 7, welche mit der jeweils zugeordneten Z-Auflage 5 in Berührung ist.

Fig. 6e zeigt eine detailliertere Ansicht eines verwendeten Z-Auflagenpakets 90, bei welchem eine Gegenrolle 80 dargestellt wurde. Das Z-Auflagenpaket 90 umfasst hierbei einen Träger 91, welcher beispielsweise dem Ausleger 21 entsprechen kann. Aufgesetzt auf den Träger 91 befinden sich sowohl auf dessen Oberseite als auch auf dessen Unterseite Justierbleche 92, welche die exakte Justierung zur Erzielung einer gewünschten Positionierung ermöglichen. Des Weiteren umfasst das Z-Auflagenpaket 90 sowohl auf seiner Oberseite bzw. seiner Unterseite eine Auflagerampe 93, welche zum Auffahren auf die Z-Positionierrolle 7 dient bzw. das Einfahren zwischen die Z-Positionierrolle und die Gegenrolle 80 erleichtert. Grundsätzlich ist auch denkbar, dass die entsprechenden Z-Auflagenpakete 90 mit einer Vertiefung 43 ausgeformt sind, sodass eine Y-Z-Auflage erzielbar ist, wie sie in Fig. 3d dargestellt wurde. In der Ausführung mit Spannmittel in Form einer Gegenrolle 80 ist der Abstand zwischen der Z-Positionierrolle 7 und der Gegenrolle 80 und die Dicke des Z-Auflagenpakets 90 dazwischen so exakt aufeinander abgestimmt, das kein weiterer Versatz in Z-Richtung möglich ist.

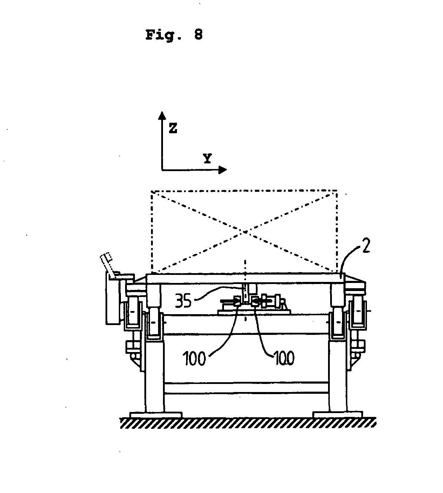

Fig. 8 zeigt eine weitere Alternative einer X-Positionierung ohne Anordnung eines Anschlags. Die alternative X-Positionierung wird hierbei durch Klemmbacken 100 erzielt, welche beispielsweise an das Längsschwert 35 am Bauteilträgerwagen 2 angreifen oder eigens dafür vorgesehene Anordnungen von Schwertern fassen. Die exakte Positionierung kann hierbei durch eine exakte Halteposition, erzielt durch die Antriebssteuerung, beispielsweise durch einen Servomotor, erreicht werden, sodass die Position durch die Klemmbacken 100 nur noch fixiert werden muss. Es können beispielsweise aber auch Anordnungen von Passstiften vorgesehen sein, welche in vertikal angeordnete Langlöcher des Schwerts 35 eingreifen, und so entlang der X-Achse eine exakte Positionierung fixieren, ohne dass die mögliche Verschiebung entlang der Z-Achse durch die Z-Positionierung verhindert wird.

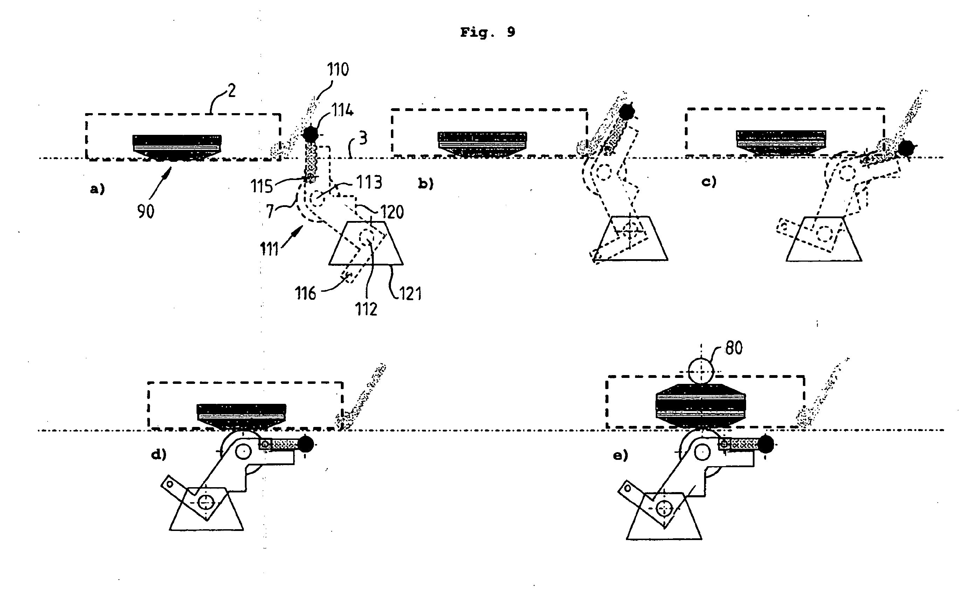

Fig. 9 zeigt eine überdies zweckmäßige erfindungsgemäße Ausgestaltung der Z-Positionieranordnung, wobei diese auch für eine entsprechende Z-Y-Positionierung, wie sie in Fig. 3d dargestellt wurde, ausführbar ist.

Fig. 9a bis 9e zeigen den Ablauf eines Einfahrvorgangs in Momentaufnahmen eines Bauteilträgerwagens 2 mit entsprechenden Z-Auflagen 5, wobei vorliegend nur eine Z-Auflage 5 an einer Positionsrolle 7 dargestellt ist, welche, wie es der erfindungsgemäße Zweck verlangt, erst dann aktiviert wird, wenn der benötigte Kontakt zur Positionierung unmittelbar bevorsteht.

Die erfindungsgemäße Vorrichtung umfasst hierbei am Bauteilträgerwagen 2 einen Aktuator 110, welcher dem Z-Auflagenpaket 90 voraneilt. Entsprechend der versetzten Anordnung der Z-Positionierrollen, wie sie in Fig. 6 bzw. 7 dargestellt wurde, können auch die Aktuatoren 110 und die Z-Auflagepakete 90 sowie die Positionierrollen 7 in vorliegend exemplarisch dargestellter Ausführung der Fig. 9 versetzt angeordnet werden.

Die Z-Positionierrolle der Fig. 9 weist hierbei ein Hebelgelenk 111 auf, welches um ein ihr gegenüber tiefer liegendes versetztes Gelenklager 112 drehbar angeordnet ist. Das Hebelgelenk 111 trägt ein Rollenlager 113 oder eine Rollenachse, an welchem die Positionierrolle 7 drehbar angeordnet ist. Fig. 9a zeigt einen senkrechten ersten Zustand des Hebelgelenks 110, bei welchem ein Aktivierhebel 114 in einem oberen Bereich von dem Aktuator 110 bedient werden kann. Der Aktivierhebel umfasst ein Kippgelenk 115, welches ihn im Falle eines Rückwärtsfahrens des Bauteilträgerwagens 2 entsprechend ausweichen lässt.

Das Hebelgelenk 110 weist an seinem unteren Ende eine Aufnahme 116 für Rückholmittel, beispielsweise eine Rückholfeder auf, welche vorliegend nicht näher dargestellt ist. Die Aufnahme 116 bewegt sich beim Umlegen des Hebelgelenks 110 nach oben, sodass eine entsprechende Spannung eines Rückholmittels erzeugt werden kann.

Beim Ablauf der Bewegung nach Fig. 9a bis 9d wird nunmehr das Hebelgelenk 111 durch den Aktuator 110, welcher am Hebelgelenk gegen einen Anschlag anliegt, umgelegt. Die Positionierrolle 7, welche in einem ersten senkrechten Zustand (entspricht Fig. 9a) unterhalb der Ebene der Rollenbahn 3 liegt, wird durch das umlegen des Hebelgelenks 111 exzentrisch nach oben bewegt, sodass sie in einem zweiten waagerechten Zustand (Fig. 9 d) aus der ebene der Rollenbahn 3 zumindest minimal herausragt. Auf diese Weise kann das Z-Auflagenpaket 90 auf die Positionierrolle 7 auffahren, und die exakte Z-Positionierung erzielen.

Das Hebelgelenk 111 umfasst einen Anschlag 120, welcher beim Erreichen der waagerechten Position auf einen Sockel 121 oder einen entsprechenden Gegenanschlag trifft und so die Bewegung der Positionierrolle 7 stoppt.

Hierdurch wird ebenfalls erreicht, dass die Z-Auflagen in der Endposition durch die Schwerkraft des Bauteilträgerwagens verriegelt sind. Die entsprechenden Auflagen aus Hebelgelenk 111 sind ebenfalls über Abstimmbleche einstellbar, sodass die Auflagenhöhe in Z, welche über die Rolle 7 erfolgt, individuell angepasst werden kann.

Fig. 9e zeigt eine Ausführung der Z-Positionierung mit erfindungsgemäßem Hebelgelenk 111, wobei vorliegend noch eine Gegenrolle 80 als oberes Spannmittel dargestellt ist, zwischen diese und die Positionierrolle 7 das Z-Auflagenpaket 90 direkt beim Einfahren in die Arbeitsstation positioniert werden kann.

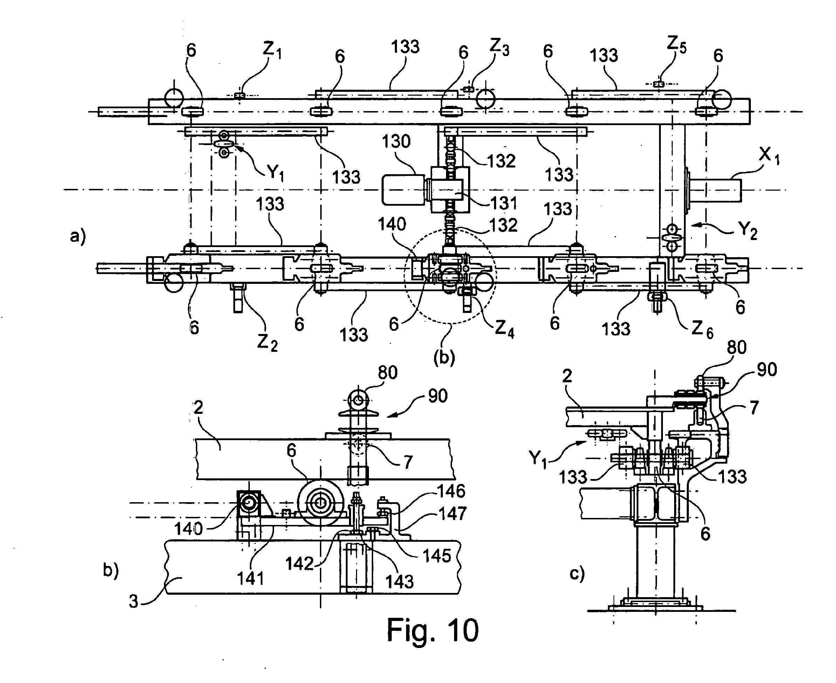

Fig. 10a zeigt eine Draufsicht einer erfindungsgemäßen Fördereinrichtung mit angetriebenen gefederten Förderrollen 6. Der Antrieb der Förderrollen erfolgt über eine Kombination aus einem Antriebsmotor 130, welcher über ein Getriebe 131 und Kardangelenke 132 auf die mittleren Förderrollen 6 als Antrieb wirkt. An der Antriebswelle sind des Weiteren Riemen 133 befestigt, welche über entsprechende weitere Antriebsachsen die anderen Förderrollen 6 in Rotation versetzen. Riemen ermöglichen einen Versatz in Z-Höhe durch die gefederten, im Folgenden beschriebenen, Antriebsrollen. Die Antriebsriemen sind vorliegend versetzt außen- sowie innenseitig an der Rollenbahn angeordnet, könnten aber auch anderweitig an den drehbaren Antriebsachsen vorgesehen werden.

Die gezeigte Fördereinrichtung verfügt ebenfalls über Z-Positionierungen Z1 bis Z6, die beschriebenen Y-Positionierungen Y1, Y2 in Form eines Längsschwerts zwischen zwei Positionierrollen sowie einen nicht dargestellten, vor den Bauteilträgerwagen 2 einschwenkbaren X-Anschlag an der ebenfalls mehrfach vorab gezeigten Position X1.

An der Stelle (b) ist exemplarisch eine schwenkbare Z-Positionierrolle detaillierter dargestellt, wobei diese später in vergrößerter Darstellung in Fig. 10b weiter erläutert werden soll. Die gefederte Förderrolle 6 ist an einem Schwenklager 140 schwenkbar aufgehängt und erlaubt, dass beim Einfahren eines Bauteilträgerwagens 2 dieser durch die Förderrollen 6 angetrieben wird, auch wenn er zur exakten Positionierung auf entsprechende Z-Positionierrollen ausfährt, da die Rollen dem ausgeführten Hub in Z-Richtung folgen. Beim Auffahren auf die entsprechenden Positioniereinheiten wird der Bauteilträgerwagen in seiner Z-Position leicht angehoben, sodass die Förderrollen 6, welche nunmehr als Antrieb dienen, diesen Hub mit ausführen müssen, um nach wie vor ausreichend stark an den Bauteilträgerwagen angepresst zu werden, um die notwendige Haftreibung zum schnellen Bewegen und Abbremsen des Bauteilträgerwagens 2 aufzuweisen.

Der Antrieb über Kardangelenke ist notwendig, damit ein entsprechender Z-Versatz der Förderrollen 6 durch die gefederte Aufhängung am Schwenklager 40 erfolgen kann, ohne dass ein entsprechender Z-Höhenversätz durch die komplette Antriebseinheit erfolgen müsste.

Fig. 10b zeigt einen Ausschnitt in seitlicher Projektion der gefederten Förderrollen 6, welche in Fig. 10a unter dem Bezugszeichen (b) markiert wurde. Das Lager 140 ist am Träger der Rollenbahn 3 befestigt und trägt an einem Ausleger 141 die Förderrolle 6 in ihrem Rollenlager. Der Ausleger 141 weist an seinem vorderen Ende eine Aufnahme für eine Feder mit einer entsprechenden Feder-Spannschraube auf, welche eine Anpresskraft in Z-Richtung, also nach oben gerichtet, zur Verfügung stellt. Die Anpresskraft kann vorliegend im Bereich zwischen 200 N und 1000 N, vorzugsweise zwischen 300 N und 800 N liegen. Zum Anpassen der Anpresskraft wird die Feder 142 entsprechend über die Schraube 143 vorgespannt, sodass sie beim Auffahren des Bauteilträgerwagens 2 auf die Förderrolle 6 die benötigte Gegenkraft zur Verfügung stellt. Der Ausleger 141 wird an seinem vordersten Ende in Z-Richtung nach unten durch einen unteren Anschlag 145 gestützt und durch einen oberen Anschlag 146 in seiner Bewegungsfreiheit nach oben begrenzt, sodass, wenn kein Bauteilträgerwagen 2 auf der Förderrolle 6 aufliegt, die Förderrolle in einer beschränkten Schwenkposition um das Lager 140 nach oben verharrt. Beide Anschläge 145 sowie 146 sind in einem Profil 147 angeordnet, welches ebenfalls auf dem Träger der Rollenbahn 3 befestigt ist. Exemplarisch dargestellt ist vorliegend ebenfalls die Z-Positionierung mit einer Z-Positionierrolle 7, einer Z-Auflage sowie einer entsprechenden Gegenrolle 80, wie sie bereits vorab mehrfach beschrieben wurde.

Fig. 10c zeigt eine Draufsicht in Bewegungsrichtung des Bauteilträgerwagens 2, wobei vorliegend nicht der entsprechende Ausschnitt der Darstellung (b) gewählt wurde, sondern eine Darstellung mit nebenliegender Y-Positionierung in Form eines Y-Rollenpaars 50 an einem Längsschwert dargestellt ist. Die Z-Positionierung erfolgt ebenfalls über eine Z-Positionierrolle 7 und eine entsprechende Gegenrolle 80, wobei vorliegend die Z-Positionierauflagen nebeneinander versetzt dargestellt sind, um die einzelne Z-Positionierung an unterschiedlichen Stellen Z1-Z6 durch unterschiedliche Auflagen bereitzustellen, wie in Fig. 6 sowie Fig. 7 bereits erläutert wurde. Die hier dargestellte Förderrolle 6 wird über Riemen 133 angetrieben bzw. gibt über den entsprechenden weiteren Riemen ihre Antriebsleistung an andere eine Folgerolle weiter.

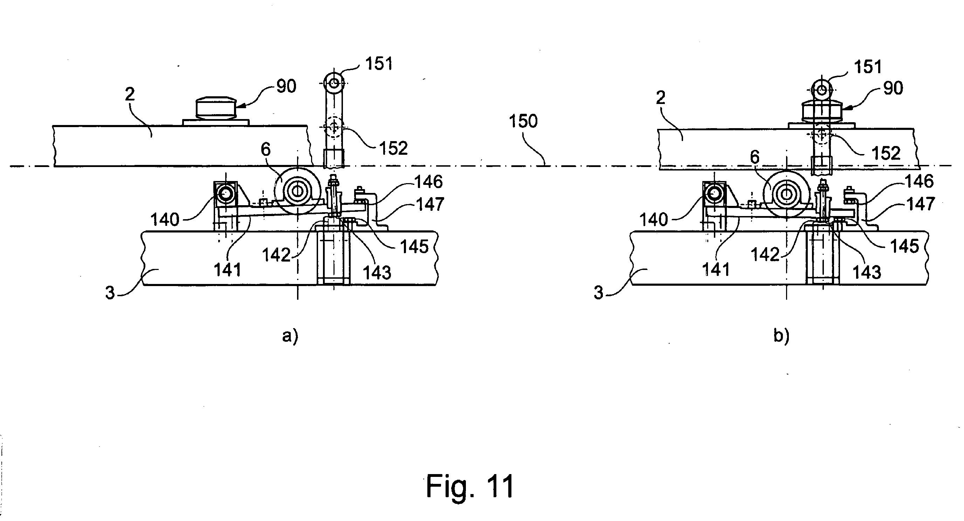

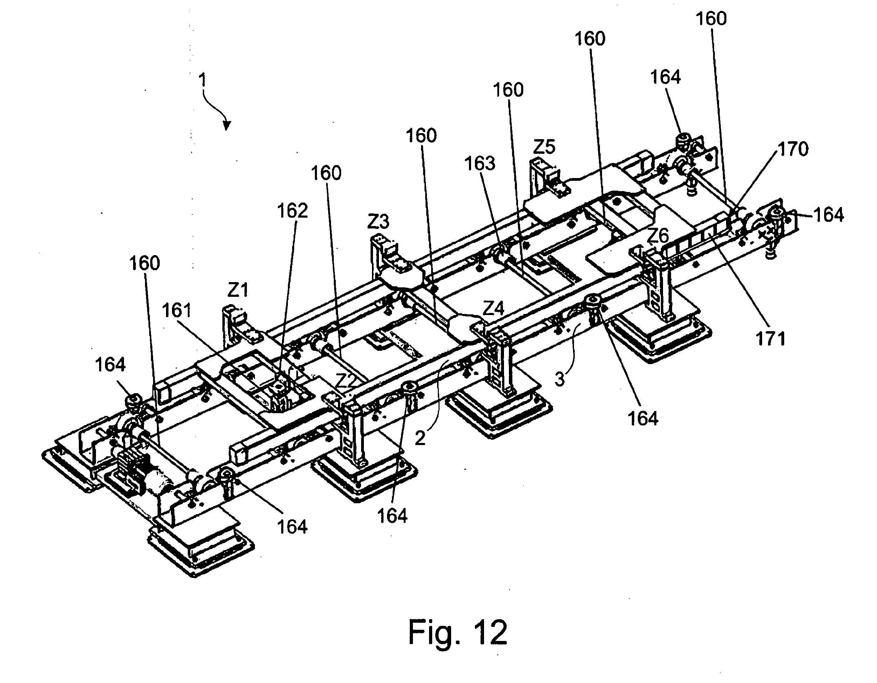

Fig. 11 a) und b) zeigt die ausschnittsweise Seitenansicht einer erfindungsgemäßen Fördereinrichtung mit angetriebenen gefederten Rollen. Das System unterscheidet sich hinsichtlich der Ausführung wie bereits unter Fig. 10 gezeigt dadurch, dass die gefederten Antriebsrollen 6 mit einer durchgehenden Welle 160 (später in Fig. 12 beschrieben) ausgeführt sind. Die Lagerung der Antriebsrollen ist dabei so ausgeführt, dass unterschiedliche Z-Höhen an den Antriebsrollen 6 (z.B. während des Transports) durch die Schiefstellung des Lagers aufgenommen werden können. Die Antriebsrollen selbst sind hierbei an der Lauffläche vorteilhaft ballig ausgeführt. Durch diese Ausgestaltung kann die Anzahl der benötigten Lagerstellen, Riemen und Riemenscheiben reduziert werden. Weiterhin können die Riemen wie in Fig. 12 gezeigt innerhalb des Systems angeordnet werden, wodurch das Baumaß des Gesamtsystems optimiert wird. Je nach Anforderung an das Gesamtsystem ist eine Riemenanordnung auch außerhalb des Systems möglich.

Zur Z-Positionierung fährt der Bauteilträgerwagen 2 auf einer Transportebene 150 in die Positionierungsanordnung ein. Die Förderrolle 6 ist über dein Schwenklager 140 und eine Feder 142 gegen einen oberen Anschlag 146 gehalten. Auch eine federnde Position ohne Anschlagkontakt ist jedoch denkbar. Wenn der Bauteilträgerwagen 2 in die Positionierungsanordnung einfährt, wird er in die in Fig. 11 b) dargestellte Position überführt. Hierzu fährt das Z-Auflagenpaket 90 zwischen die obere Positionierrolle 151 und die untere Gegenrolle 152 ein und wird durch die obere Positionierrolle 151 nach unten in eine definierte Z-Position gedrückt. Die im Schwenklager 140 durch die Feder 142 gefederte Führungsrolle 6 weicht dem Bauteilträgerwagen 2 nach unten hin aus und ermöglich somit das Einfahren in die definierte zu erreichende Position. Der Ausleger 141 sollte dazu zwischen den Anschlägen 145 und 146 ausreichend Bewegungsfreiheit haben, um die gewünschte Positionierung im Z-Versatz erlauben zu können. In einer nicht dargestellten Ausführungsform kann die Funktion der unteren Gegenrolle 152 auch durch die entsprechend stark federbelastete Führungsrolle 6 übernommen werden, so dass die Gegenrolle 152 nicht realisiert werden muss.

Figur 12 zeigt eine weitere erfindungsgemäße Ausgestaltung der Fördereinrichtung 1. Die Fördereinrichtung 1 ist vorliegend mit einem teilweise dargestellten Bauteilträgerwagen 2 dargestellt. Die Rollenbahn 3 ist ebenfalls ohne angeordnete Antriebsriemen dargestellt, um die Darstellung der erfindungsgemäßen Bauteile zu ermöglichen.

Die Darstellung gemäß Figur 12 zeigt zwischen den Förderrollen 6 angeordnete durchgehende Wellen 160, welche über einen Riemenantrieb 37 angetrieben werden. Durch diese Wellen ist nur eine Antriebskopplung pro Förderrollenpaar notwendig, was die Anordnung vereinfacht und kompakter macht. Die Motor 37 und Riemenanordnung der Riemenführung 163 ist hierbei vorzugsweise so ausgeführt, dass der Abstand von der Motorwelle zur Antriebswelle insbesondere gleich dem Drehpunkt 140 der gefederten Rolle 6 zu dessen Hauptlager ist. Durch diese Anordnung ergibt sich kein bzw. nur ein geringer Einfluss auf die Riemenlänge während der Z-Bewegung der Antriebsrolle.

Der Bauteilträgerwagen 2 ist vorliegend an den Positionierungsstellen Z1 bis Z6 mit nach unten einfahrenden Positioniervorrichtungen ausgestattet, wie sie in Fig. 11 a) und b) beschrieben wurden. Zusätzlich ist zwischen den Positioniervorrichtungen Z1 und Z2 ein X-Positionsgeber 161 vorgesehen, welcher am Boden oder im Rahmen der Rollenbahn angeordnet ist. Der Positionsgeber ist vorzugsweise als Hubzylinder mit einer Zentrierspitze ausgebildet, welche beim Bauteilträgerwagen zur X-Positionierung nach oben in eine Aufnahme 162 einfährt. Auf diese Weise kann die X-Position fein justiert und gleichzeitig fixiert werden.

Seitlich an der Rollenbahn 3 können auch eine oder mehrere Führungsrollen 164 vorgesehen sein, welche den Bauteilträgerwagen seitlich führen. Diese Führung kann aber auch in einer nicht dargestellten Ausführungsform durch die Y-Positioniermittel übernommen werden.

In einer bevorzugten Ausführungsform ist ein Codeband 171 oder ein ähnliches Datenträgermittel in einem Informationsbereich 170 angeordnet. Der Informationsbereich kann dabei ganz oder teilweise den Rahmen des Bauteilträgerwagens 2 bedecken. Die Position des Informationsbereichs ist in vorteilhafter Weise so zu wählen, dass Sie durch ein Lesegerät (nicht dargestellt) im positionierten Zustand des Bauteilträgerwagens 2 einsehbar ist. Das Codeband 171 (Barcode, Datamatrixcode o.ä.) kann als Mittel zur X-Positionierungserfassung verwendet werden, wenn am Bauteilträgerwagen in der Endposition ablesbar angebracht ist. Mittels eines Code Lesesystems(z.B. Kamera) welches stationär in der Station angebracht ist, kann die Positionierung mit einer Genauigkeit von Bruchteilen eines Millimeters erfolgen. Vorzugsweise wird dieses Codeband zum Bauteilträgerwagen definiert eingerichtet, so dass bei Einsatz mehrerer Trägerwagen die Positionierung in unterschiedlichen Stationen immer die Gleiche ist.

Zusätzlich können jeweils am Anfang (bzw. auch am Ende) des Codebandes eindeutige Codemarkierungen angebracht werden. Hierdurch wird dem Bauteilträgerwagen eine eindeutige Nummer zugeordnet und dieser ist identifizierbar. Mittels des Codeband Lesegeräts kann hiermit bereits beim Einfahren des Bauteilträgerwagens die Trägerwagennummer ausgelesen werden bevor der Trägerwagen zur eigentlichen Positionierung kommt.

Durch diese eindeutige Markierung ergeben sich mehrere vorteilhafte Ausgestaltungen. Zum einen kann auf das Einrichten des Codebandes zum Bauteilträgerwagen 2 verzichtet werden. Der Versatz des Codebandes zum Bauteilträgerwagen 2 wird einmal ermittelt und in der Steuerung hinterlegt. Beim Einfahren in die Station wird dann die Bauteilträgerwagennummer ausgelesen und der entsprechende Positionierwert aufgerufen. Hierdurch kann die Codbandbefestigung wesentlich vereinfacht werden. Zum anderen kann bereits beim Einfahren des Bauteilträgerwagens das jeweilige Werkstück identifiziert werden. Hierzu wird an der Beladestelle des Trägerwagens das Werkstück (z.B. ein bestimmtes Bauteil oder Karossentyp) mit der Nummer des Trägerwagens elektronisch in der Steuerung hinterlegt. Alle weiteren Bearbeitungsstationen im Fertigungssystem können auf diese zentrale Information zugreifen. Denkbar sind auch Abwandlung dieser Ausführung dahingehend, dass die Daten nicht vollständig dezentral gehalten werden, sondern an jedem Fertigungsabschnitt in der jeweils ersten Station eine Prüfung Werkstück und Trägerwagen stattfindet und diese Informationen nur im jeweiligen Fertigungsabschnitt zur Verfügung stehen. Auf eine aufwändige dezentrale Datenhaltung kann somit verzichtet werden. Der Vorteil der Verbindung der Werkstückdaten mit dem Bauteilträgerwagen ist, dass zum einen die Erkennung des entsprechenden Werkstücks bereits in der Einfahrbewegung erfolgt und die Rüstzeiten oder Zustellbewegungen der Bearbeitungswerkzeuge früher erfolgen können. Dies führt zu einer Erhöhung der wertschöpfenden Arbeitszeit. Zum anderen können die bisher aufwändigen Identifikationssysteme des Werkstücks bzw. des Bauteilträgerwagens 2 in der jeweiligen Arbeitsstation entfallen, was zu einer Kosteneinsparung führt. Die Werkstückerkennung und die Positionierung des Trägerwagens erfolgen durch das gleiche Codeband Lesesystem. In Kombination mit dem Motorgeber und dem durchgängigem Codeband am Bauteilträgerwagen, können somit auch auf weitere sonst übliche Initiatoren, für zum Beispiel Bauteilträgerwagen -Verfolgung, Überlauf, Einfahrtstrigger etc., verzichtet werden.

Ein weiterer Vorteil der Codeband Positionierung ist die Positionierung an unterschiedlichen Stellungen in der Bearbeitungsstation. Jede X Position des Bauteilträgerwagens kann mit dem vorhandenen Codband Lesegerät in der gleichen Genauigkeit erfolgen wie an der Bearbeitungsstelle selbst. Dieser Vorteil kann z.B. zum Beladen von weiteren Werkstücken auf dem Bauteilträgerwagen verwendet werden. Auch ist eine Bearbeitung wie z.B. Ausschweißen von Karossen an unterschiedlichen X Positionen denkbar. Hierdurch kann z.B. auf Verfahrachsen von Robotern o.ä. verzichtet werden. Die Haltung der X Position kann sowohl durch die Regelung des Motors als auch durch das Einfallen einer Motorbremse erfolgen.

Bei größeren Kräften auf das System können auch Abstecker/Positionsgeber 161 oder Anschläge, wie diese dem Stand der Technik entsprechen, ergänzend verwendet werden.

Wie bereits dargelegt sind die einzelnen Bestandteile der erfindungegemäßen Vorrichtung soweit technisch Möglich nicht auf Ihre in den Figuren dargestellte Kombination beschränkt. Es sind vielmehr all diejenigen Ausführungsformen beansprucht, welche in den Rückbezügen der Patentansprüche realisiert sind und sich als vorteilhafte Ausführungen und zweckmäßige Weiterbildungen darstellen.

### Bezugszeichenliste:

- 1: Fördereinrichtung
- 2: Bauteilträgerwagen
- 3: Rollenbahn
- 4: Arbeitsstation
- 5: Z-Auflage
- 6: Förderrolle
- 7: Positionierrolle
- 8: Kniehebel
- 9: Aktuator
- 10: Hubeinheit
- 20: Längsträger
- 21: Ausleger
- Z1-Z6: Ort der Z-Positionierungen
- Y1,Y2: Ort der Y-Positionierungen
- X1: Ort der X-Positionierung
- 30: Bauteil / Bauteilgruppe
- 31: Hubzylinder
- 33: Spannmittel
- 34: Klemmhebel
- 35: Längsschwert
- 36: Reibrollenpaar
- 37: Motor
- 39: Anschlag
- 40: Kegelrolle
- 41: Y-Z-Auflage
- 42: Rollenfläche
- 43: Vertiefung
- 44: Y-Formschluss
- 50: Y-Rollenpaar
- 60: Laufrolle
- 61: Schiene
- 70: Y1-Schwert
- 71: Y2-Schwert
- 72: Y1-Rollenpaar
- 73: Y2 Rollenpaar
- 80: Gegenrolle
- 90: Z-Auflagenpaket
- 91: Träger
- 92: Justierblech
- 93: Auflagerampe
- 100: X-Klemmbacken
- 110: Aktuator
- 111: Hebelgelenk
- 112: Gelenklager / Gelenkachse
- 113: Rollenlager / Rollenachse
- 114: Aktivierungshebel
- 115: Kippgelenk
- 120: Anschlag
- 121: Sockel
- 130: Antriebsmotor
- 131: Getriebe
- 132: Kardangelenk
- 133: Riemen
- 140: Schwenklager
- 141: Ausleger
- 142: Feder
- 143: Schraube
- 145: Anschlag
- 146: Anschlag
- 147: Profil
- 150: Transportebene
- 151: obere Positionierrolle
- 152: untere Gegenrolle
- 160: Welle (durchgehend)
- 161: X-Positionsgeber / Abstecker
- 162: Aufnahme
- 163: Riemenführung
- 164: seitliche Führungsrolle
- 170: Informationsbereich
- 171: Codeband

## Patentansprüche

1. Fördereinrichtung (1) zum Transport von Bauteilen (30) oder Bauteilgruppen (30) von und zu einer oder mehreren Arbeitsstationen (4), wobei die Fördereinrichtung (1) eine Förderbahn und einen auf der Förderbahn bewegten Bauteilträgerwagen (2) umfasst und wobei im Bereich der Arbeitsstationen (4) an der Förderbahn Positioniervorrichtungen (Z1 - Z6, Y1, Y2, X1) vorgesehen sind, wobei während der gesamten Einfahrbewegung des Bauteilträgerwagens (2) in die Arbeitsstation (4) jedes Positioniermittel (5; 41; 90) an dem Bauteilträgerwagen (4) mit nur seiner, die gewünschte Position bestimmenden Positioniervorrichtung (Z1 - Z6, Y1, Y2, X1) an der Förderbahn in Berührung kommt,
wobei die Positioniervorrichtungen (Z1 - Z6, Y1, Y2, X1) mit Positioniermitteln (5; 41; 90) an dem Bauteilträgerwagen (2) derart zusammenwirken, dass eine gewünschte Position des Bauteilträgerwagens (2) in der Arbeitsstation (4) in allen drei Raumrichtungen (X, Y, Z) direkt durch die Einfahrbewegung des Bauteilträgerwagens (2) in die Arbeitsstation (4) eingenommen wird, **dadurch gekennzeichnet,**
- **dass** ein Z-Auflagenpaket (90) des Bauteilträgerwagens entweder zwischen eine obere Positionierrolle (151) und eine untere Gegenrolle (152) oder zwischen die obere Positionierrolle (151) und eine entsprechend stark federbelastete Führungsrolle (6) einfährt und durch die obere Positionierrolle (151) nach unten in eine definierte Z-Position gedrückt wird,
- wobei eine in einem Schwenklager (140) der Förderbahn durch eine Feder (142) gefederte Führungsrolle (6) dem Bauteilträgerwagen (2) nach unten hin ausweicht und somit ein Einfahren in die definierte zu erreichende Position ermöglicht.

2. Fördereinrichtung (1) nach Anspruch 1, **dadurch gekennzeichnet, dass** als zusammenwirkende Positioniervorrichtungen (Z1 - Z6, Y1, Y2, X1) an der Förderbahn und Positioniermittel (5; 41; 90) an dem Bauteilträgerwagen (2)
- an jeder Längsseite des Bauteilträgerwagens (2) bzw. der Förderbahn mindestens zwei, vorzugsweise drei Positionierrollen (7; 151, 152) mit drei Positionierauflagen (5; 90) für die Positionierung in vertikaler (Z) Richtung,
- entlang mindestens einer Diagonale oder Längsseite des Bauteilträgerwagens (2) mindestens zwei formschlüssig zusammenwirkende Positionieranordnungen (40, 41; 35, 50; 70, 72; 71, 73) zur Positionierung quer zur Bewegungsrichtung (Y),
- sowie mindestens einen Positionieranschlag (39) bzw. eine Positionierraste zur Positionierung entlang der Bewegungsrichtung (X)
umfasst sind.

3. Fördereinrichtung nach Anspruch 1 oder 2, **dadurch gekennzeichnet, dass** an den zusammenwirkenden Positioniervorrichtungen an der Förderbahn und Positioniermitteln (5; 41; 90) an dem Bauteilträgerwagen (2) zumindest teilweise, vorzugsweise an den Z-Positionierungen eine Hubeinheit (10) vorgesehen ist, welche durch den in die Arbeitsstation (4) einfahrenden Bauteilträgerwagen (2) erst kurz vor Erreichen seiner Endposition betätigt wird.

4. Fördereinrichtung nach einem der vorangegangenen Ansprüche, **dadurch gekennzeichnet, dass** die Positionierung in Z-Richtung durch Auffahren von Z-Auflagen, vorzugsweise aus Hartmetall bestehend und insbesondere Justiereinlagen umfassend, auf Positionierrollen (7; 151) erreicht wird, wobei vorzugsweise die Positioniervorrichtung an der Förderbahn der Positionierrolle (7; 151) gegenüberliegend eine Spannrolle oder einen Spannhebel zur Fixierung der Z-Auflagen entlang der Z-Richtung umfasst.

5. Fördereinrichtung nach Anspruch 4, **dadurch gekennzeichnet, dass** die vorhandenen Positionierrollen (7; 151) entlang einer Längsseite des Bauteilträgerwagens (2) quer zur Fortbewegungsrichtung zueinander derart versetzt angeordnet sind, dass sich deren Verlaufsbahnen entlang der Fortbewegungsrichtung nicht überdecken.

6. Fördereinrichtung nach einem der vorangegangenen Ansprüche, **dadurch gekennzeichnet, dass** ein Antrieb vorgesehen ist, welcher als Reibrollenantrieb in der Förderbahn an einem Längsschwert (35) an dem Bauteilträgerwagen (2) angreift und vorzugsweise zusätzliche Bremsbacken und/oder eine Positionsraste zur Positionierung in X-Richtung und/oder einen Servomotor als Antrieb umfasst.

7. Fördervorrichtung nach einem der vorangegangenen Ansprüche, **dadurch gekennzeichnet, dass** die Positionierung in Y-Richtung mindestens zwei, entlang einer Diagonalen des Bauteilträgerwagens (2) angeordnete Kegel-Positionierrollen umfasst, welche mit entsprechenden einen Formschluss ausbildenden Vertiefungen in Positionierauflagen zusammenwirken, und vorzugsweise als Z-Positionierrollen und Z-Auflagen eingesetzt werden.

8. Fördervorrichtung nach einem der vorangegangenen Ansprüche, **dadurch gekennzeichnet, dass** die Positionierung in Y-Richtung durch Einfahren mindestens eines Längsschwertes (35) in mindestens ein quer zur Längsrichtung angeordnetes Backenfutter und/oder Rollenpaar (50) eingestellt wird.

9. Fördervorrichtung nach einem der vorangegangenen Ansprüche, **dadurch gekennzeichnet, dass** als Positioniervorrichtung an der Förderbahn an jeder Längsseite des Bauteilträgerwagens (2) mindestens zwei Positionierrollen (7; 80; 51) an Hebelgelenken (111) vorgesehen sind, wobei jede Positionierrolle (7; 80; 151) in einem ersten senkrechten Zustand ihres Hebelgelenks (111) unterhalb einer Lauffläche der Förderbahn angeordnet ist, und in einem zweiten waagerechten Zustand ihres Hebelgelenks (111) zumindest teilweise oberhalb der Lauffläche angeordnet ist, und wobei am Bauteilträgerwagen (2) vor dem jeweiligen Positioniermittel (5; 41; 90) ein Aktuator (9; 110), insbesondere eine Steuernocke vorgesehen ist, um das jeweilige Hebelgelenk (111) kurz vor dem erreichen der Endposition von dem senkrechten Zustand in den waagerechten Zustand zu überführen, und ein Auffahren einer Positionierauflage auf die Positionierrolle (7; 80; 151) zu ermöglichen.

10. Fördervorrichtung nach Anspruch 9, **dadurch gekennzeichnet, dass** jedes Hebelgelenk (111) Rückstellmittel, insbesondere eine Rückstellfeder umfasst, um nach dem Verlassen der Positionierauflage von der Positionierrolle (7; 80; 151) das Hebelgelenk (111) wieder in einen senkrechten Zustand zurück zu führen.

11. Fördervorrichtung nach Anspruch 9 oder 10, **dadurch gekennzeichnet, dass** die Hebelgelenke (111) untereinander gekoppelt, insbesondere durch ein Koppelgestänge miteinander verbunden sind, und dass die Betätigung der Hebelgelenke (111) durch einen Aktuator (9; 110), vorzugsweise durch den am in Bewegungsrichtung vordersten Positioniermittel (5; 41; 90) angeordneten Aktuator (9; 110) erfolgt.

12. Fördervorrichtung nach einem der vorangegangenen Ansprüche, **dadurch gekennzeichnet, dass** als Positioniervorrichtungen an der Förderbahn zumindest teilweise Rollen (151; 152; 164) und als Positioniermittel (5; 41; 90) am Bauteilträgerwagen (2) zumindest teilweise Auflagepakete (90) vorgesehen sind.

13. Fördervorrichtung nach einem der vorangegangenen Ansprüche, **dadurch gekennzeichnet, dass** die Positioniervorrichtungen an der Förderbahn und die Positioniermittel (5; 41; 90) am Bauteilträgerwagen (2) zumindest teilweise zwischen den Laufflächen der Förderbahn angeordnet sind.

14. Fördervorrichtung nach einem der vorangegangenen Ansprüche, **dadurch gekennzeichnet, dass** die Förderrollen als Antrieb des Bauteilträgerwagens (2) ausgebildet sind, wobei die Förderrollen (6) in Z-Richtung derart schwenkbar aufgehängt sind, dass eine Verschwenkhöhe von mindestens einem Z-Positionierversatz vorgesehen ist wobei vorzugsweise die Förderrollen (6) über Krafterzeugungsmittel gegen den Bauteilträgerwagen gedrückt werden und dadurch eine gefederte Lagerung mit einer definierten Anpresskraft, insbesondere zwischen 200 N und 1000 N vorgesehen ist.

15. Fördervorrichtung nach Anspruch 14, **dadurch gekennzeichnet, dass** am Bauteilträgerwagen (2) mindestens ein Informationsbereich, vorzugsweise ein Codeband (171), ein Barcode, ein RFID Chip oder dergleichen vorgesehen ist, wobei der Informationsträger mindestens eine der Informationen aus der Gruppe der absoluten Position des Bauteilträgerwagens in mindestens einer Raumrichtung und/oder einer Identifikation des Bauteilträgerwagens (2) und/oder einen Erkennungstrigger der Anwesenheit eines Bauteilträgerwagens (2) oder Ähnliches enthält und diese von einem Lesegerät, vorzugsweise einer Kamera oder einem Empfänger ausgewertet wird.

## Claims

1. Conveyor equipment (1) for transporting components (30) or assemblies (30) from and to one or several workstations (4), the conveyor equipment (1) comprising a conveyor track and a component carriage (2) moved on the conveyor track, and wherein positioning devices (Z1-Z6, Y1, Y2, X1) are provided in the area of the workstations (4), wherein during the entire approach of the component carriage (2) into the workstation (4), each positioning means (5; 41; 90) on the component carriage (4) only contacts the positioning device (Z1-Z6, Y1, Y2, X1) thereof determining the desired position on the conveyor track,
wherein the positioning devices (Z1-Z6, Y1, Y2, X1) cooperate with positioning means (5; 41; 90) on the component carriage (2) so that a desired position of the component carriage (2) in the workstation (4) is occupied in all three spatial directions (X, Y, Z) directly by means of the approach of the component carriage (2) into the workstation (4),
**characterized in that**
- a Z support block (90) of the component carriage approaches either between an upper positioning roller (151) and a lower counter-roller (152) or between the upper positioning roller (151) and a correspondingly strongly spring-loaded guide roller (6) and is urged by the upper positioning roller (151) downward into a defined Z position,
- wherein a guide roller (6) spring-mounted in a swivel bearing (140) of the conveyor track by a spring (142) avoids the component carriage (2) downwards, thereby enabling an approach into the defined position to be reached.

2. The conveyor equipment (1) according to claim 1, **characterized in** comprising as the cooperating positioning devices (Z1-Z6, Y1, Y2, X1) on the conveyor track and the positioning means (5; 41; 90) on the component carriage (2)
- on each longitudinal side of the component carriage (2) or the conveyor track at least two, preferably three, positioning rollers (7; 151, 152) with three positioning supports (5; 90) for positioning in the vertical (Z) direction,
- along at least one diagonal or longitudinal side of the component carriage (2) at least two positioning arrays (40, 41; 35, 50; 70, 72; 71, 73) cooperating by positive engagement for positioning transversely to the direction of motion (Y),
- as well as at least one positioning stop (39) or one positioning catch for positioning in the direction of motion (X).

3. The conveyor equipment according to claim 1 or 2, **characterized in that** on the cooperating positioning devices on the conveyor track and the positioning means (5; 41; 90) on the component carriage (2), a lifting unit (10) is provided at least partially, preferably at the Z positioning devices, said unit being operated by the component carriage (2) approaching the workstation (4) only shortly before reaching the end position thereof.

4. The conveyor equipment according to any of the preceding claims, **characterized in that** positioning in the Z direction is achieved by driving Z supports, preferably made of hard metal and in particular comprising adjusting inserts, onto positioning rollers (7; 151), wherein the positioning device on the conveyor track opposite the positioning roller (7; 151) preferably comprises a tensioning roller or a tensioning lever for fixing the Z supports in the Z direction.

5. The conveyor equipment according to claim 4, **characterized in that** the existing positioning rollers (7; 151) are arranged along a longitudinal side of the component carriage (2) transversely to the direction of motion while being offset with respect to each other so that the trajectories thereof do not overlap in the direction of motion.

6. The conveyor equipment according to any of the preceding claims, **characterized in that** a drive is provided which acts as a friction roller drive in the conveyor track at a longitudinal strut (35) on the component carriage (2) and preferably comprises additional brake shoes and/or a positioning catch for positioning in the X direction and/or a servomotor as a drive.

7. The conveyor equipment according to any of the preceding claims, **characterized in that** positioning in the Y direction comprises at least two tapered positioning rollers arranged along a diagonal of the component carriage (2) and cooperating with corresponding recesses in positioning supports creating a positive engagement, and preferably implemented as Z positioning rollers and Z supports.

8. The conveyor equipment according to any of the preceding claims, **characterized in that** positioning in the Y direction is adjusted by approaching at least one longitudinal strut (35) into at least one jaw chuck and/or roller pair (50) arranged transversely to the longitudinal direction.

9. The conveyor equipment according to any of the preceding claims, **characterized by** providing as the positioning device on the conveyor track on each longitudinal side of the component carriage (2) at least two positioning rollers (7; 80; 51) on lever joints (111), wherein each positioning roller (7; 80; 151) in a first vertical state of the lever joint (111) thereof is arranged below a running surface of the conveyor track, and in a second horizontal state of the lever joint (111) thereof is arranged at least partially above the running surface, and wherein on the component carriage (2) in front of the respective positioning means (5; 41; 80), an actuator (9; 110), in particular a control cam, is provided in order to transition the respective lever joint (111) shortly before reaching the end position from the vertical state into the horizontal state, and to allow for a positioning support to be driven onto the positioning roller (7; 80; 151).

10. The conveyor equipment according to claim 9, **characterized in that** each lever joint (111) comprises return means, in particular a return spring, in order to return the lever joint (111) to a vertical state when the positioning support has left the positioning roller (7; 80; 151).

11. The conveyor equipment according to claim 9 or 10, **characterized in that** the lever joints (111) are coupled with each other, in particular interconnected by a coupling linkage, and **in that** operation of the lever joints (111) is performed by an actuator (9; 110), preferably by the actuator (9; 110) arranged on the positioning means (5; 41; 90) foremost in the direction of motion.

12. The conveyor equipment according to any of the preceding claims, **characterized by** providing as the positioning devices on the conveyor track at least partially rollers (151; 152; 164) and as the positioning means (5; 41; 90) on the component carriage (2) at least partially support blocks (90).

13. The conveyor equipment according to any of the preceding claims, **characterized in that** the positioning devices on the conveyor track and the positioning means (5; 41; 90) on the component carriage (2) are arranged at least partially between the running surfaces of the conveyor track.

14. The conveyor equipment according to any of the preceding claims, **characterized in that** the conveyor rollers are made as the drive of the component carriage (2), wherein the conveyor rollers (6) are pivotingly suspended in the direction so that a pivoting height of at least one Z positioning offset is provided, wherein preferably the conveyor rollers (6) are urged via power generating means against the component carriage, and thereby, spring-mounting with a defined contact force, in particular between 200 N and 1000 N, is provided.

15. The conveyor equipment according to claim 14, **characterized in that** on the component carriage (2) at least one information area, preferably a code strip (171), a barcode, an RFID chip, or the like, is provided, wherein the information carrier contains at least one piece of information from the group of the absolute position of the component carriage In at least one spatial direction and/or an identification of the component carriage (2) and/or a detection trigger of the presence of a component carriage (2), or the like, and this is evaluated by a reader, preferably a camera or a receiver.

## Revendications

1. Equipement de convoyage (1) pour transporter des composants (30) ou ensembles de composants (30) en provenance et à destination d'un ou de plusieurs postes de travail (4), l'équipement de convoyage (1) comprenant une voie de convoyage et un chariot de transport de composants (2) déplacé sur la voie de convoyage, et dans lequel des dispositifs de positionnement (Z1-Z6, Y1, Y2, X1) sont fournis dans la zone des postes de travail (4), dans lequel pendant toute l'approche du chariot de transport de composants (2) dans le poste de travail (4), chaque moyen de positionnement (5 ; 41 ; 90) sur le chariot de transport de composants (4) entre en contact uniquement avec son dispositif de positionnement (Z1-Z6, Y1, Y2, X1) qui détermine la position souhaitée sur la voie de convoyage,
dans lequel les dispositifs de positionnement (Z1-Z6, Y1, Y2, X1) coopèrent avec des moyens de positionnement (5 ; 41 ; 90) sur le chariot de transport de composants (2) de telle sorte qu'une position souhaitée du chariot de transport de composants (2) dans le poste de travail (4) est occupée dans l'ensemble des trois directions spatiales (X, Y, Z) directement par le mouvement d'approche du chariot de transport de composants (2) dans le poste de travail (4),
**caractérisé en ce que**
- un bloc de supports Z (90) du chariot de transport de composants s'approche soit entre un rouleau de positionnement supérieur (151) et un contre-rouleau inférieur (152), soit entre le rouleau de positionnement (151) et un rouleau de guidage (6) fortement chargé par ressort de façon correspondante, et est poussé par le rouleau de positionnement supérieur (151) vers le bas dans une position Z définie,
- dans lequel un rouleau de guidage (6) monté sur ressort par un ressort (142) dans un palier de pivotement (140) de la voie de convoyage évite le chariot de transport de composants (2) vers le bas, permettant ainsi une approche de la position définie à atteindre.

2. Equipement de convoyage (1) selon la revendication 1, **caractérisé en ce qu'**il comprend comme dispositifs de positionnement (Z1-Z6, Y1, Y2, X1) coopérant sur la voie de convoyage et comme moyens de positionnement (5 ; 41 ; 90) sur le chariot de transport de composants (2) :
- sur chaque côté longitudinal du chariot de transport de composants (2) respectivement de la voie de convoyage, au moins deux, de préférence trois rouleaux de positionnement (7 ; 151, 152) avec trois supports de positionnement (5 ; 90) pour le positionnement dans la direction verticale (Z),
- suivant au moins une diagonale ou un côté longitudinal du chariot de transport de composants (2), au moins deux agencements de positionnement (40, 41 ; 35, 50 ; 70, 72 ; 71, 73) coopérant à engagement positif pour un positionnement transversalement à la direction de mouvement (Y),
- ainsi qu'au moins une butée de positionnement (39) ou un cran de positionnement pour le positionnement dans la direction de mouvement (X).

3. Equipement de convoyage selon la revendication 1 ou 2, **caractérisé en ce que** sur les dispositifs de positionnement coopérant sur la voie de convoyage et le moyen de positionnement (5 ; 41 ; 90) sur le chariot de transport de composants (2), une unité de levage (10) est fournie au moins en partie, de préférence au niveau des dispositifs de positionnement Z, ladite unité étant actionnée par l'approche du chariot de transport de composants (2) dans le poste de travail (4) seulement juste avant d'atteindre sa position définitive.

4. Equipement de convoyage selon l'une quelconque des revendications précédentes, **caractérisé en ce que** le positionnement dans la direction Z est obtenu en faisant monter des supports Z, de préférence réalisés en métal dur et en particulier comprenant des inserts d'ajustement, sur des rouleaux de positionnement (7 ; 151), dans lequel de préférence le dispositif de positionnement sur la voie de convoyage à l'opposé du rouleau de positionnement (7 ; 151) comprend un rouleau de tension ou un levier de tension pour fixer les supports Z dans la direction Z.

5. Equipement de convoyage selon la revendication 4, **caractérisé en ce que** les rouleaux de positionnement (7 ; 151) existants sont agencés suivant un côté longitudinal du chariot de transport de composants (2) transversalement à la direction de mouvement, en étant décalés les uns par rapport aux autres de sorte que leurs trajectoires ne se chevauchent pas dans la direction de mouvement.

6. Equipement de convoyage selon l'une quelconque des revendications précédentes, **caractérisé en ce qu'**un dispositif d'entraînement est fourni qui agit comme un entraînement par galet de friction sur la voie de convoyage au niveau d'un étai longitudinal (35) sur le chariot de transport de composants (2) et comprend de préférence des mâchoires de freinage supplémentaires et/ou un cran de positionnement pour le positionnement dans la direction X et/ou un servomoteur comme dispositif d'entraînement.

7. Equipement de convoyage selon l'une quelconque des revendications précédentes, **caractérisé en ce que** le dispositif de positionnement dans la direction Y comprend au moins deux rouleaux de positionnement coniques agencés suivant une diagonale du chariot de transport de composants (2) et coopérant avec des creux correspondants dans des supports de positionnement qui créent un engagement positif, et sont de préférence mis en oeuvre sous forme de rouleaux de positionnement Z et de supports Z.

8. Equipement de convoyage selon l'une quelconque des revendications précédentes, **caractérisé en ce que** le positionnement dans la direction Y est ajusté par l'approche d'au moins un étai longitudinal (35) dans au moins un mandrin à mâchoires et/ou une paire de rouleaux (50) agencés transversalement à la direction longitudinale.

9. Equipement de convoyage selon l'une quelconque des revendications précédentes, **caractérisé en ce que** comme dispositif de positionnement sur la voie de convoyage, au moins deux rouleaux de positionnement (7 ; 80 ; 51) sont fournis sur des articulations de levier (111), de chaque côté longitudinal du chariot de transport de composants (2), dans lequel chaque rouleau de positionnement (7 ; 80 ; 151) dans un premier état vertical de son articulation de levier (111) est agencé sous une surface de roulement de la voie de convoyage, et dans un deuxième état horizontal de son articulation de levier (111) est agencé au moins en partie au-dessus de la surface de roulement, et dans lequel sur le chariot de transport de composants (2) devant le moyen de positionnement (5 ; 41 ; 90) respectif, un actionneur (9 ; 110), en particulier une came de commande, est fourni(e) afin de faire passer l'articulation de levier (111) respective de l'état vertical à l'état horizontal juste avant d'atteindre la position définitive, et de permettre la montée du support de positionnement sur le rouleau de positionnement (7 ; 80 ; 151).

10. Equipement de convoyage selon la revendication 9, **caractérisé en ce que** chaque articulation de levier (111) comprend des moyens de rappel, en particulier un ressort de rappel, afin de ramener l'articulation de levier (111) à un état vertical lorsque le support de positionnement a quitté le rouleau de positionnement (7 ; 80 ; 151).

11. Equipement de convoyage selon la revendication 9 ou 10, **caractérisé en ce que** les articulations de levier (111) sont couplées entre elles, en particulier interconnectées par une tringlerie d'accouplement, et **en ce que** l'actionnement des articulations de levier (111) par un actionneur (9 ; 110), de préférence par l'actionneur (9 ; 110) agencé sur le moyen de positionnement (5 ; 41 ; 90) tout à fait à l'avant dans la direction de mouvement.

12. Equipement de convoyage selon l'une quelconque des revendications précédentes, **caractérisé en ce que** comme dispositifs de positionnement sur la voie de convoyage, des rouleaux (151 ; 152 ; 164) sont fournis au moins partiellement, et comme moyens de positionnement (5 ; 41 ; 90) sur le chariot de transport de composants (2), des blocs de support (90) sont fournis au moins partiellement.

13. Equipement de convoyage selon l'une quelconque des revendications précédentes, **caractérisé en ce que** les dispositifs de positionnement sur la voie de convoyage et les moyens de positionnement (5 ; 41 ; 90) sur le chariot de transport de composants (2) sont agencés au moins partiellement entre les surfaces de roulement de la voie de convoyage.

14. Equipement de convoyage selon l'une quelconque des revendications précédentes, **caractérisé en ce que** les rouleaux de convoyage sont réalisés sous forme de dispositif d'entraînement du chariot de transport de composants (2), dans lequel les rouleaux de convoyage (6) dans la direction Z sont suspendus en pivotement de telle sorte qu'une hauteur de pivotement d'au moins un décalage de positionnement Z est fourni, dans lequel de préférence les rouleaux de convoyage (6) sont poussés par des moyens de génération d'énergie contre le chariot de transport de composants, et de ce fait, un montage sur ressort avec une force de contact définie, en particulier entre 200 N et 1000 N, est fourni.

15. Equipement de convoyage selon la revendication 14, **caractérisé en ce que** sur le chariot de transport de composants (2), au moins une zone d'information, de préférence une bande codée (171), un code à barres, une puce RFID ou similaires, est fournie, dans lequel le support d'information contient au moins l'une des informations du groupe de la position absolue du chariot de transport de composants dans au moins une direction spatiale et/ou d'une identification du chariot de transport de composants (2) et/ou d'un déclenchement de détection de la présence d'un chariot de transport de composants (2) ou similaires, et celle-ci est évaluée par un lecteur, de préférence une caméra ou un récepteur.
